# EUROPÄISCHE PATENTANMELDUNG

(11) **EP 3 441 717 A1**
(43) Veröffentlichungstag der Anmeldung: **13.02.2019**
(21) Anmeldenummer: 18188179.8
(22) Anmeldetag: 09.08.2018
(51) Int. Cl.: G01C 11/06, H04N 13/128

(54) **VERFAHREN UND EINRICHTUNG ZUR RECHNERGESTEUERTEN BEREITSTELLUNG VON BILDERN EINES STEREOKAMERASYSTEMS SOWIE COMPUTERPROGRAMM**

(30) Priorität: 09.08.2017 DE 102017118110
(71) Anmelder: Gottfried Wilhelm Leibniz Universität Hannover, 30167 Hannover (DE)
(72) Erfinder: MENTZER, Dipl.-Ing. Nico, 30161 Hannover (DE); PAYÁ VAYÁ, Prof. Dr. Guillermo, 30171 Hannover (DE); BLUME, Prof. Dr. Holger, 30900 Wedemark (DE); BEHMANN, M.Sc. Nicolai, 30165 Hannover (DE)
(74) Vertreter: Gramm, Lins & Partner Patent- und Rechtsanwälte PartGmbB

(57) **Zusammenfassung**

Die Erfindung betrifft ein Verfahren zum Bereitstellen von Bildern eines Stereokamerasystems, das wenigstens eine erste Kamera und eine zweite Kamera aufweist, durch die im Wesentlichen der gleiche Umgebungsbereich der realen Umgebung des Stereokamerasystems fortlaufend aufgenommen wird und in Form von ersten Bildern der ersten Kamera und zweiten Bildern der zweiten Kamera fortlaufend wiedergegeben wird, wobei für ein jeweiliges erstes Bild und ein dem ersten Bild zeitlich zugeordnetes zweites Bild ein rechnerischer Ausrichtungsvorgang durchgeführt wird, bei dem miteinander korrespondierende Bildpunkte im ersten und im zweiten Bild einander zugeordnet werden, wobei der rechnerische Ausrichtvorgang im laufenden Betrieb des Stereokamerasystems unter realen Einsatzbedingungen in Echtzeit fortlaufend für die ersten und zweiten Bilder durchgeführt wird, während die erste und die zweite Kamera die reale Umgebung des Stereokamerasystems erfassen. Die Erfindung betrifft außerdem eine Einrichtung zur rechnergesteuerten Bereitstellung von Bildern des Stereokamerasystems, die zur Bereitstellung der Bilder gemäß einem derartigen Verfahren eingerichtet ist. Die Erfindung betrifft außerdem ein Computerprogramm zur Durchführung eines solchen Verfahrens.

## Beschreibung

Die Erfindung betrifft ein Verfahren zum Bereitstellen von Bildern eines Stereokamerasystems, das wenigstens eine erste Kamera und eine zweite Kamera aufweist, durch die im Wesentlichen der gleiche Umgebungsbereich der realen Umgebung des Stereokamerasystems fortlaufend aufgenommen wird und in Form von ersten Bildern der ersten Kamera und zweiten Bildern der zweiten Kamera fortlaufend wiedergegeben wird. Die Erfindung betrifft außerdem eine Einrichtung zur rechnergesteuerten Bereitstellung von Bildern des Stereokamerasystems, die zur Bereitstellung der Bilder gemäß einem derartigen Verfahren eingerichtet ist. Die Erfindung betrifft außerdem ein Computerprogramm zur Durchführung eines solchen Verfahrens.

Die Einsatzgebiete und der Bedarf an Stereokamerasystemen in der modernen Technik sind umfangreich. So werden Stereokamerasysteme beispielsweise für Fahrerassistenzsysteme und Systeme zum autonomen Fahren von Straßenfahrzeugen eingesetzt. Auch in anderen Bereichen der Technik gibt es Bedarf an Stereokamerasystemen, z.B. in der Robotertechnik. Stereokamerasysteme eignen sich insbesondere zur Bereitstellung von Tiefeninformationen in aufgenommenen Bildern der Umgebung. Für eine zuverlässige Ermittlung der Tiefeninformationen aus den einzelnen Bildern der linken und der rechten Kamera des Stereokamerasystems müssen zuverlässig Pixelkorrespondenzen zwischen den Bildpunkten aus den linken und den rechten Eingangsbildern der Kameras ermittelt werden. Hierfür ist eine präzise Kalibrierung der Kameras zueinander erforderlich. Um eine konstante Kalibrierung auch im realen Betrieb, z.B. in einem Fahrzeug, zu gewährleisten, werden bisher nur Stereokamerasysteme mit geringem Kameraabstand, d.h. geringer Basislinie, eingesetzt. Dabei sind die beiden Kameras starr miteinander gekoppelt, z.B. indem sie in demselben Gehäuse angeordnet sind. Durch die geringe Basislinie ist die Distanzreichweite der Erfassung aktueller Stereokamerasysteme in Automobilen, die beispielsweise zwischen Rückspiegel und Windschutzscheibe montiert werden, auf relativ geringe Werte begrenzt, z.B. ca. 50 m. Gewünscht wäre aber eine Erhöhung dieses Entfernungsbereiches, um auch auf größere Entfernung eine zuverlässige Tiefeninformation aus den Bildern des Stereokamerasystems zu gewinnen. Dies würde aber eine deutliche Vergrößerung der Basislinie erfordern. In Fahrzeugen könnte dies dadurch realisiert werden, dass die einzelnen Kameras des Stereokamerasystems relativ weit entfernt voneinander montiert werden, z.B. in den Außenspiegeln. Dies führt aber im realen Betrieb des Stereokamerasystems aufgrund von Vibrationen bei der Fahrt des Fahrzeuges sowie aufgrund von Verwindungen in der Karosserie und anderen Teilen zu einer Dekalibrierung des Stereokamerasystems, d.h. die Kamerabilder sind nicht mehr ausreichend präzise zueinander ausgerichtet, was eine zuverlässige Entfernungsermittlung (Tiefeninformation) aus den Kamerabildern verhindert.

Der Erfindung liegt die Aufgabe zugrunde, eine Lösung für dieses Problem anzugeben.

Diese Aufgabe wird gelöst durch ein Verfahren der eingangs genannten Art, bei dem für ein jeweiliges erstes Bild und ein dem ersten Bild zeitlich zugeordnetes zweites Bild ein rechnerischer Ausrichtungsvorgang durchgeführt wird, bei dem miteinander korrespondierende Bildpunkte im ersten und im zweiten Bild einander zugeordnet werden, wobei der rechnerische Ausrichtvorgang im laufenden Betrieb des Stereokamerasystems unter realen Einsatzbedingungen in Echtzeit fortlaufend für die ersten und zweiten Bilder durchgeführt wird, während die erste und die zweite Kamera die reale Umgebung des Stereokamerasystems erfassen. Die Erfindung erlaubt es, Stereokamerasysteme mit großer Basislinie in Anwendungen einzusetzen, die bisher nicht möglich erschienen, z.B. in Straßenfahrzeugen, Schienenfahrzeugen, oder in Anlagen der industriellen Produktion oder in Robotern. Weitere Anwendungsgebiete sind die Sicherung eines Flughafenvorfeldes, eines Containerhafens sowie die Überwachung großer Produktionsstätten. Weitere Anwendungsfelder liegen in der Robotik, beim führerlosen Fahren oder in der Landwirtschaft.

Der Begriff der Echtzeit ist hierbei nicht im Sinne einer harten Definition zu verstehen. Dies ist dadurch begründet, dass das erfindungsgemäße Verfahren sowie die nachfolgend erläuterte Einrichtung mit einer gewissen Taktung arbeiten, wobei bei der Bilderfassung insbesondere die Bilderfassungrate eine wesentliche Einflussgröße ist. Beispielsweise können 15-60 Bilder pro Sekunde erfasst werden. In diesem Sinne ist der Begriff der Echtzeit derart zu verstehen, dass im Rahmen der Taktung bzw. der Bilderfassungsrate geringe Abweichungen von der Echtzeitverarbeitung entstehen können, das Verfahren aber zumindest schritthaltend mit der Echtzeit durchgeführt wird.

Die Basislinie kann dabei beispielsweise größer als 50 cm sein, oder größer als 100 cm, oder größer als 150 cm. Die bereitgestellten Bilder des Stereokamerasystems eignen sich dennoch zur Disparitätsbestimmung, d.h. zur Ermittlung einer Disparitätskarte, sowie der Bestimmung der damit einhergehenden Tiefeninformation der Bilder. Dies ermöglicht es wiederum, in Folge der großen Basislinie mit dem Stereokamerasystem eine Distanzreichweite von wenigstens 200 m zu erreichen, oder wenigstens 400 m. Das erfindungsgemäße Verfahren sorgt dabei durch den rechnerischen Ausrichtvorgang für eine Kompensation von transienten und/oder permanenten Dekalibrierungen (oder Dejustierungen) zwischen den Kameras des Stereokamerasystems. Insbesondere werden durch Vibrationen und Verformung von Trägerteilen der Kameras des Stereokamerasystems hervorgerufene Dekalibrierungen dabei kompensiert.

Die mit dem erfindungsgemäßen Verfahren zueinander ausgerichteten ersten und zweiten Bilder können dann fortlaufend einer weiteren Anwendung oder einer Weiterverarbeitung bereitgestellt werden, z.B. über eine Schnittstelle.

Die erste Kamera erzeugt somit fortlaufend erste Bilder, die zweite Kamera erzeugt fortlaufend zweite Bilder. Hierbei ist jeweils aus diesem Bilderstrom ein bestimmtes erstes Bild einem bestimmten zweiten Bild zeitlich zugeordnet, d.h. dieses Paar aus erstem und zweitem Bild gibt denselben Zeitpunkt bei der Aufnahme der realen Umgebung wieder.

Bei dem erfindungsgemäßen Verfahren erfolgt der rechnerische Ausrichtvorgang anhand der von der realen Umgebung des Stereokamerasystems aufgenommenen Bilder, d.h. unter realen Einsatzbedingungen, und ohne besondere optische Ausrichthilfen oder optische Kalibriermarken, was unter realen Einsatzbedingungen nicht möglich wäre.

Für die Durchführung des rechnerischen Ausrichtvorgangs ist es in der Regel nicht erforderlich, dass die korrespondierenden Bildpunkte im ersten und zweiten Bild, die einander zugeordnet werden, für die gesamte Menge an Bildpunkten des ersten bzw. des zweiten Bildes durchgeführt wird, d.h. es ist nicht erforderlich, dies für jedes Bildpixel durchzuführen. Es ist beispielsweise in vielen Fällen ausreichend, diese Zuordnung in horizontaler und vertikaler Richtung für einzelne Merkmals- oder Bildpunkte durchzuführen, die weniger als 10% oder weniger als 5% der Gesamtanzahl an Pixel in einem Bild repräsentieren. Hierdurch kann der Ausrichtvorgang bereits ausreichend zuverlässig durchgeführt werden. Wie nachfolgend noch näher ausgeführt wird, können für die Auswahl der einander zuzuordnenden Bildpunkte auch Merkmalspunkte identifiziert werden, die besonders charakteristische Punkte im Bild oder in Bildregionen darstellen.

Das Ziel des Ausrichtvorgangs besteht darin, einen Bildpunkt des ersten Bildes einem zugehörigen Bildpunkt des zweiten Bildes oder umgekehrt eindeutig zuzuordnen, insbesondere pixelgenau zuzuordnen. Dabei kann bei dem Ausrichtvorgang ein Ausrichten des ersten Bildes bezüglich der Bildebene des zweiten Bildes erfolgen, oder ein Ausrichten des zweiten Bildes bezüglich der Bildebene des ersten Bildes.

Gemäß einer vorteilhaften Weiterbildung der Erfindung ist vorgesehen, dass in dem rechnerischen Ausrichtvorgang das erste Bild bezüglich einer Referenzbildebene ausgerichtet wird und das zweite Bild bezüglich derselben Referenzbildebene ausgebildet wird. Auf diese Weise werden beide Bilder, d.h. das erste und das zweite Bild, bezüglich derselben Referenzbildebene ausgerichtet. Auf diese Weise ist eine vollständige Vereinheitlichung der Bildinformation möglich, was eine besonders zuverlässige Bestimmung einer Disparitätsinformation und dementsprechend einer Tiefeninformation aus den Bildern überhaupt erst ermöglicht.

Gemäß einer vorteilhaften Weiterbildung der Erfindung ist vorgesehen, dass zur Vorbereitung des rechnerischen Ausrichtvorgangs ein zu einem jeweiligen Bildpunkt des ersten Bildes korrespondierender Bildpunkt des zweiten Bildes gesucht wird, indem die Suche des Bildpunkts im zweiten Bild auf einen festgelegten Suchbereich im zweiten Bild beschränkt wird, der kleiner ist als das gesamte zweite Bild, insbesondere indem der Suchbereich maximal 25 % der Bildfläche des zweiten Bildes umfasst. Der Suchbereich kann insbesondere maximal 15 % der Bildfläche des zweiten Bildes umfassen, oder maximal 10%. Durch eine solche Beschränkung des Suchumfangs auf einen bestimmten Suchbereich kann die für den Suchvorgang erforderliche Rechenzeit erheblich reduziert werden, im Vergleich zu einer vollständigen Suche im gesamten zweiten Bild. Auf diese Weise kann das Verfahren auch in kostengünstigen Hardware-Umgebungen implementiert werden, auch wenn besonders hochauflösende Kameras eingesetzt werden.

Der Suchbereich weist verschiedene Parameter auf, z.B. Größe (Pixelzahl), Lage und geometrische Form des Suchbereiches. Die geometrische Form des Suchbereiches kann beispielsweise kreisrund, oval, rechteckig oder quadratisch sein, oder mehreckig. Auch unregelmäßige Formgebungen des Suchbereiches sind möglich. Die Lage des Suchbereiches wird in erster Näherung maßgeblich durch die Lage des jeweiligen Bildpunkts des ersten Bildes bestimmt, bezüglich dessen die Suche des korrespondierenden Bildpunkts im zweiten Bild durchgeführt wird. Je nach Umfang der Dekalibrierungen, z.B. bei starken Erschütterungen des Stereokamerasystems, kann bezüglich dieser Ausgangslage eine mehr oder weniger starke Verschiebung der Lage des Suchbereiches erforderlich sein. Diese Lageverschiebung stellt einen weiteren Parameter des Suchbereiches dar. Einer, mehrere oder alle Parameter des Suchbereiches können dabei statisch und/oder dynamisch festgelegt werden, d.h. im realen Betrieb des Stereokamerasystems verändert werden.

Gemäß einer vorteilhaften Weiterbildung der Erfindung ist vorgesehen, dass wenigstens ein Parameter des Suchbereichs anhand festgelegter elektrischer und/oder mechanischer Parameter des Stereokamerasystems und/oder dessen mechanischer Befestigung an einem mit dem Stereokamerasystem ausgerüsteten Gegenstand festgelegt wird. Auf diese Weise kann der Suchbereich bereits vorab auf sinnvolle Werte eingeschränkt werden. Wenn bei einer bestimmten Implementation des Stereokamerasystems beispielsweise bekannt ist, dass die Empfindlichkeit gegenüber auftretenden Vibrationen vergleichsweise gering ist, so kann aufgrund solcher Parameter bereits ein vergleichsweise geringerer Suchbereich (geringere Größe) definiert werden als bei einer empfindlicheren Implementation.

Anhand der zuvor genannten Parameter des Stereokamerasystems oder dessen mechanischer Befestigung an dem Gegenstand kann insbesondere die Größe und/oder die Lage und/oder die Form des Suchbereiches statisch oder dynamisch beeinflusst werden. In einer vorteilhaften Weiterbildung kann dabei insbesondere die Lageverschiebung und/oder die Größe statisch oder dynamisch aufgrund der genannten Parameter beeinflusst werden.

Gemäß einer vorteilhaften Weiterbildung der Erfindung ist vorgesehen, dass wenigstens ein Parameter des Suchbereichs dynamisch aufgrund von bei wenigstens einem vorhergehenden Ausrichtvorgang gewonnenen Daten festgelegt oder beeinflusst wird. Auf diese Weise wird eine Rückführungsschleife implementiert, durch die das erfindungsgemäße Verfahren in gewisser Weise prädiktiv gestaltet wird, was gegenüber bekannten Verfahren eine weitere deutliche Verbesserung darstellt. Der wenigstens eine Parameter des Suchbereiches kann somit aufgrund bereits vorher aufgenommener und ausgewerteter Bilder weiter optimiert werden und damit der Suchaufwand weiter reduziert werden.

Gemäß einer vorteilhaften Weiterbildung der Erfindung ist vorgesehen, dass der wenigstens eine Parameter des Suchbereichs aufgrund von bei wenigstens einem vorhergehenden Entzerrungsvorgang gewonnenen Daten der geometrischen Entzerrung des ersten und/oder des zweiten Bildes festgelegt oder beeinflusst wird. Auf diese Weise kann der Suchbereich auch hinsichtlich von Stereokamerasystem-bedingten Verzerrungen weiter optimiert werden und der Aufwand für die Suche weiter erheblich minimiert werden.

Gemäß einer vorteilhaften Weiterbildung der Erfindung ist vorgesehen, dass der wenigstens eine Parameter des Suchbereichs aufgrund einer nach einer Disparitätsbestimmung aus den Bildern des Stereokamerasystems gewonnenen Tiefeninformation dieser Bilder festgelegt oder beeinflusst wird. Die Tiefeninformation wird im Wesentlichen am Ende der hier beschriebenen Verarbeitungskette bestimmt und stellt damit eine Dateninformation mit hohem Vorverarbeitungsgrad dar, mit der der Suchbereich gezielt weiter optimiert werden kann, um den Suchaufwand weiter deutlich einzuschränken.

Gemäß einer vorteilhaften Weiterbildung der Erfindung ist vorgesehen, dass zur Bestimmung miteinander korrespondierender Bildpunkte im ersten und zweiten Bild jeweilige Merkmalspunkte im ersten und im zweiten Bild identifiziert werden und in Echtzeit Merkmalskorrespondenzen zwischen den Merkmalspunkten im ersten und zweiten Bild identifiziert werden. Die Merkmalspunkte stellen dabei charakteristische Punkte im Bild oder Bildregionen dar, die zuverlässig und schnell wiederfindbar sind. Im Anschluss werden die gefundenen Bildpunkte mit einem eindeutigen Deskriptor beschrieben. Der eindeutige Deskriptor ermöglicht das Zuordnen identischer Merkmalspunkte der unterschiedlichen ersten und zweiten Bilder. Hierzu können beispielsweise bereits im Stand der Technik beschriebene Verfahren eingesetzt werden, z.B.

David G Lowe. Distinctive image features from scale-invariant keypoints. International journal of computer vision, 60(2):91-110, 2004, Bay. Surf: Speeded up robust features. Computer Vision ECCV, pages 404-417, 2006,
Edward Rosten. Faster and better: A machine learning approach to corner detection. Pattern Analysis and Machine Intelligence, 2012,
Michael Calonder. Brief: Computing a local binary descriptor very fast. IEEE Transactions on Pattern Analysis and Machine Intelligence, 2012.

Gemäß einer vorteilhaften Weiterbildung der Erfindung ist vorgesehen, dass für einen jeweiligen rechnerischen Ausrichtvorgang in Echtzeit die jeweils notwendigen Parameter, beispielsweise in Form einer Fundamentalmatrix, bestimmt werden, die geometrische Korrekturparameter für die Durchführung des Ausrichtvorgangs der Bilder der ersten und zweiten Kamera aufweist. Auf diese Weise kann schnell und zuverlässig eine Bildentzerrung aufgrund von Bildentzerrungsmatrizen durchgeführt werden.

Die eingangs genannte Aufgabe wird außerdem gelöst durch eine Einrichtung zur rechnergesteuerten Bereitstellung von Bildern eines Stereokamerasystems, das wenigstens eine erste und eine zweite Kamera aufweist, durch die im Wesentlichen der gleiche Umgebungsbereich der realen Umgebung des Stereokamerasystems fortlaufend aufgenommen wird und in Form von ersten Bildern der ersten Kamera und zweiten Bildern der zweiten Kamera fortlaufend wiedergegeben wird, wobei die Einrichtung zur Bereitstellung der Bilder des Stereokamerasystems gemäß einem Verfahren der zuvor erläuterten Art eingerichtet ist. Auch hierdurch können die zuvor erläuterten Vorteile realisiert werden. Die Einrichtung kann insbesondere einen Rechner, beispielsweise in Form eines Mikrocomputers, Mikrocontrollers oder einer anderen ein Programm ausführenden Recheneinheit oder einer applikationsspezifischen dedizierten Hardwareeinheit, z.B. FPGA, ASIC, aufweisen. Das Verfahren kann dann in Form eines Computerprogramms auf diesem Rechner oder in Form einer in der applikationsspezifischen dedizierten Hardwareeinheit implementierten Funktion ausgeführt werden.

Die eingangs genannte Aufgabe wird außerdem gelöst durch ein Computerprogramm mit Programmcodemitteln, eingerichtet zur Durchführung eines Verfahrens der zuvor erläuterten Art, wenn das Computerprogramm auf einem Rechner einer Einrichtung zur rechnergesteuerten Bereitstellung von Bildern eines Stereokamerasystems ausgeführt wird, z.B. einer Einrichtung der zuvor erläuterten Art. Auch hierdurch können die zuvor erläuterten Vorteile realisiert werden.

Die Erfindung wird nachfolgend anhand von Ausführungsbeispielen unter Verwendung von Zeichnungen nähert erläutert.

Es zeigen
- Figur 1: den Betrieb eines Stereokamerasystems in der realen Umgebung und
- Figur 2: den Ablauf eines erfindungsgemäßen Verfahrens in Form eines Blockschaltbildes.

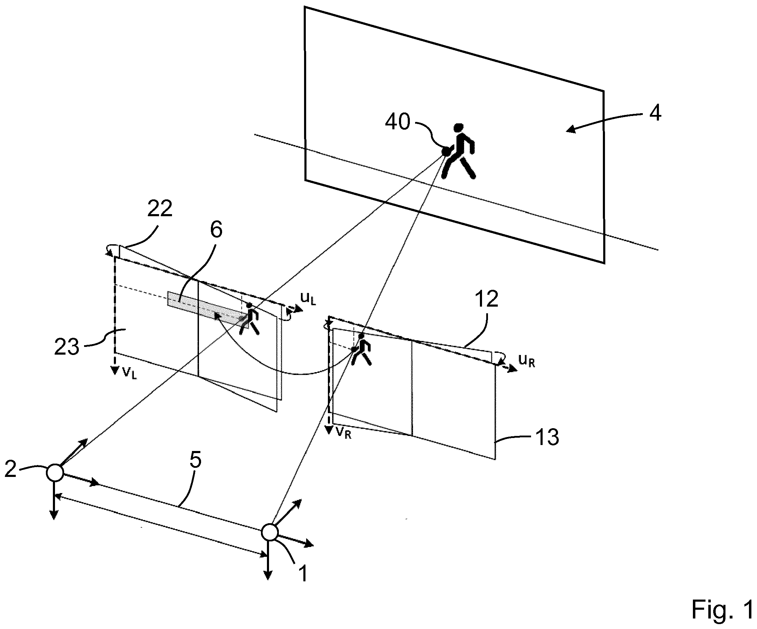

Die Figur 1 zeigt ein Stereokamerasystem mit einer ersten Kamera 1 und einer zweiten Kamera 2. Die erste Kamera 1 und die zweite Kamera 2 sind um eine Basislinie 5 voneinander beabstandet, z.B. um die Breite eines Kraftfahrzeuges. Die erste und die zweite Kamera 1, 2 erfassen die reale Umgebung 4 des Stereokamerasystems. Hierbei erzeugt die erste Kamera 1 fortlaufend erste Bilder 12, die zweite Kamera 2 erzeugt fortlaufend zweite Bilder 22. Die ersten und zweiten Bilder 12, 22 sind noch nicht rektifiziert, d.h. sie sind nicht derart zueinander ausgerichtet, dass daraus unmittelbar die gewünschte Tiefeninformation bestimmt werden kann. Die Figur 1 zeigt beispielhaft ein aus dem ersten Bild 12 durch einen rechnerischen Ausrichtvorgang bestimmtes erstes rektifiziertes Bild 13 sowie ein aus dem zweiten Bild 22 durch einen rechnerischen Ausrichtvorgang bestimmtes zweites rektifiziertes Bild 23. In der Darstellung der Figur 1 ist die Rektifizierung vereinfacht anhand einer Winkelkorrektur der jeweiligen Bildebene dargestellt. Das erfindungsgemäße Verfahren umfasst einen erweiterten Ausrichtvorgang, bei dem zusätzlich auch Dekalibrierungen aufgrund von Vibrationen oder sonstigen transienten Auslenkungen der Kameras 1, 2 korrigiert werden.

Die erste Kamera 1 kann wahlweise die linke oder rechte Kamera des Stereokamerasystems sein, die zweite Kamera 2 zwei ist dann die jeweils andere Kamera des Stereokamerasystems.

Zur Vorbereitung des Ausrichtvorgangs können zunächst charakteristische Bildmerkmale in Form von Merkmalspunkten 40 im ersten Bild 12 und im zweiten Bild 22 identifiziert und jeweils durch einen Merkmalsdeskriptor eindeutig beschrieben werden. Korrespondierende Merkmalspunkte werden im Anschluss einander zugeordnet, wobei für diese Suche von Merkmalspunkten des Bildes 12 ein eingeschränkter Suchbereich 6 im Bild 22 verwendet wird, der kleiner ist als das gesamte zweite Bild 22. Nachdem dieser Vorgang für eine Vielzahl von Merkmalspunkten durchgeführt wurde, die im Wesentlichen vollständig über die Bildfläche des ersten Bildes 12 verteilt sind, kann der rechnerische Ausrichtvorgang durchgeführt werden.

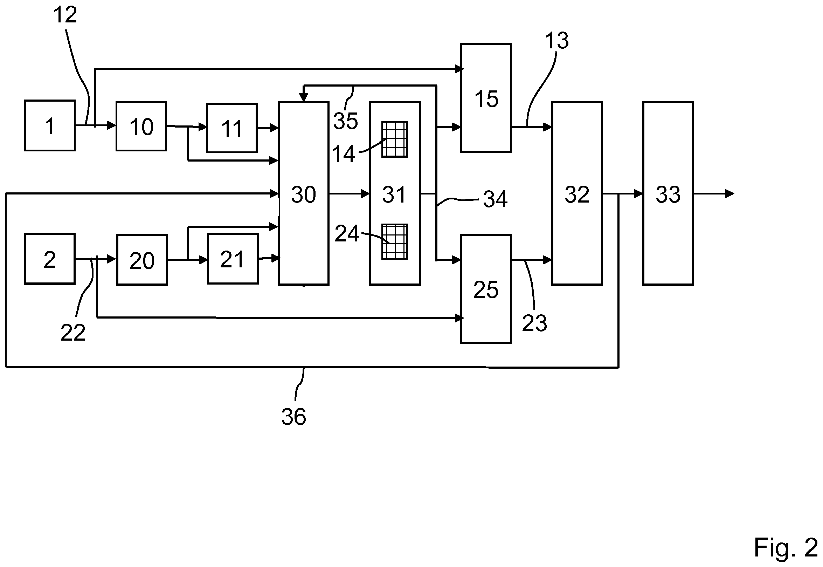

Der gesamte Vorgang und der Ablauf des erfindungsgemäßen Verfahrens sind in der Figur 2 dargestellt. Erkennbar ist, dass die erste Kamera 1 einen Datenstrom von ersten Bildern 12 an einen ersten Merkmalspunktextraktor 10 abgibt. Die zweite Kamera 2 gibt einen Datenstrom von zweiten Bildern 22 an einen zweiten Merkmalspunktextraktor 20 ab.

In dem ersten bzw. zweiten Merkmalspunktextraktor 10, 20 werden aus den jeweiligen ersten und zweiten Bildern 12, 22 charakteristische Bildmerkmale detektiert und als jeweilige Merkmalspunkte identifiziert. Die Merkmalspunkte des ersten Merkmalspunktextraktors 10 werden einem ersten Merkmalspunktdeskriptor 11 zugeführt. Dort wird jedem Merkmalspunkt ein eindeutiger Deskriptor zugeordnet. Die Merkmalspunkte des zweiten Merkmalspunktextraktors 20 werden einem zweiten Merkmalspunktdeskriptor 21 zugeführt. Dort werden die zweiten Merkmalspunkte mit einem eindeutigen Deskriptor versehen.

Hierauf folgt ein Korrespondenzen-Erkennungsblock 30. In dem Korrespondenzen-Erkennungsblock 30 wird ein Algorithmus zum Finden von Korrespondenzen zwischen den mit den Deskriptoren beschriebenen ersten und zweiten Merkmalspunkten durchgeführt. Dabei wird anhand der detektierten Merkmalspunkte ein zu einem jeweiligen Bildpunkt des ersten Bildes 12 korrespondierender Bildpunkt des zweiten Bildes 22 gesucht. Hierbei wird die Suche des Bildpunkts im zweiten Bild 22 auf den Suchbereich 6 beschränkt. Die Zuordnung von Merkmalskorrespondenzen geschieht innerhalb des Suchbereichs dabei anhand eines Ähnlichkeitsmaßes zwischen den jeweiligen Merkmalsdeskriptoren 11 und 21 der Merkmalspunkte des ersten und zweiten Bildes 10 und 20. Als Norm können abhängig vom verwendeten Verfahren eine euklidische Norm, eine Summe absoluter Differenzen, oder Hamming-Distanz oder weitere Maße zum Einsatz kommen.

Wie in der Figur 2 erkennbar ist, können in den Korrespondenz-Erkennungsblock 30 als Eingangsdaten die ersten und zweiten Merkmalspunkte aus den Merkmalspunktextraktoren 10, 20 eingespeist werden. Zudem werden in den Korrespondenz-Erkennungsblock 30 die durch die Merkmalspunktdeskriptoren 11, 21 bestimmten Deskriptoren der Merkmalspunkte eingespeist. Bereits hierdurch kann, gegebenenfalls unter Berücksichtigung weiterer, fest abgespeicherter Parameter des Stereokamerasystems und/oder dessen mechanischer Befestigung an einem Gegenstand, der Suchbereich 6 zumindest hinsichtlich eines der eingangs erläuterten Parameters festgelegt und gegebenenfalls dynamisch beeinflusst werden. In den Korrespondenz-Erkennungsblock 30 werden noch weitere Daten aus weiteren Funktionsblöcken des Verfahrens rückgeführt, worauf an späterer Stelle eingegangen werden soll.

Die im Korrespondenz-Erkennungsblock 30 bestimmten Korrespondenzen werden einem Berechnungsblock 31 zugeführt. Dort erfolgt eine Berechnung der Parameter, die für die geometrische Korrekturentzerrung der Eingangsbilder 12 und 22 notwendig sind, beispielsweise in Form einer Fundamentalmatrix. Aus jenen Parametern werden im Anschluss eine Rektifizierungsmatrix 14, die der ersten Kamera 1 zugeordnet ist, und eine zweite Rektifizierungsmatrix 24, die der zweiten Kamera 2 zugeordnet ist, berechnet werden. Die in dem Berechnungsblock 31 bestimmten Daten bzw. Matrizen werden nachfolgend einem ersten Rektifizierungsblock 15 und einem zweiten Rektifizierungsblock 25 zugeführt. Dem ersten Rektifizierungsblock 15 sind zudem die ersten Bilder 12 zugeführt. Dem zweiten Rektifizierungsblock 25 sind die zweiten Bilder 22 zugeführt. Im ersten Rektifizierungsblock 15 erfolgt ein rechnerischer Ausrichtvorgang des ersten Bildes 12, sodass das erste rektifizierte Bild 13 hieraus als Ergebnis ausgegeben wird. Im zweiten Rektifizierungsblock 25 erfolgt ein rechnerischer Ausrichtvorgang der zweiten Bilder 22, sodass das zweite rektifizierte Bild 23 als Ergebnis ausgegeben wird.

Diese ersten und zweiten rektifizierten Bilder 13, 23 können bereits als Ergebnis des erfindungsgemäßen Verfahrens bereitgestellt und ausgegeben werden, z.B. über eine Schnittstelle an andere Systeme übertragen werden. Die Figur 2 zeigt zusätzlich eine Verwendung durch Zuführung dieser ersten und zweiten rektifizierten Bilder 13, 23 zu einem Disparitätsschätzer 32. Der Disparitätsschätzer 32 führt eine Disparitätsbestimmung durch, z.B. indem er als Ausgangsgröße eine Disparitätskarte 33 erzeugt. Die Disparitätskarte 33 weist eine Tiefeninformation auf, die aus den ersten und zweiten rektifizierten Bildern 13, 23 gewonnen ist. Die Disparitätskarte 33 kann weiteren Anwendungen zur Verfügung gestellt werden, z.B. über eine Schnittstelle.

Das erfindungsgemäße Verfahren weist als Erweiterung eine erste Rückführung 35 und eine zweite Rückführung 36 auf. Über die erste Rückführung 35 werden die bei vorhergehenden Entzerrungsvorgängen durch den Berechnungsblock 31 bereitgestellten die Entzerrung der ersten und zweiten Bilder 12, 22 charakterisierenden Daten 34 zu dem Block 30 zurückgeführt. Diese können in dem Korrespondenz-Erkennungsblock 30 zur weiteren Festlegung oder Beeinflussung wenigstens eines Parameters des Suchbereiches 6 verwendet werden.

Bei der zweiten Rückführung 36 werden aus der Disparitätsbestimmung ermittelte Daten in den Korrespondenz-Erkennungsblock 30 zurückgeführt, z.B. die Tiefeninformation. Diese über die zweite Rückführung 36 zurückgeführten Daten können im Korrespondenz-Erkennungsblock 30 ebenfalls zur Beeinflussung oder Festlegung wenigstens eines Parameters des Suchbereiches 6 verwendet werden.

Durch die aus vorherigen Bildern bereits ermittelte Geometrie des Stereokamerasystems ist es somit mittels der Rückführungen 35, 36 möglich, den Suchbereich 6 zum Zuordnen der Pixelkorrespondenzen auf eine kleine lokale Nachbarschaft um einzelne Merkmalspunkte herum zu begrenzen, statt alle Merkmalspunkte untereinander zu vergleichen. Die bei hoher Bildfrequenz geringen Kalibrierungsänderungen von Bild zu Bild können dabei zur Kompensation der geometrischen Verzerrungen in den Zuordnungsprozess des nächsten Bildes zurückgeführt werden. Diese Rückführung ermöglicht eine derartige Einschränkung des ursprünglichen Suchbereiches auf einen geringen Bruchteil des Suchbereiches, dass eine echtzeitfähige Bildverarbeitung mit wenig Aufwand realisierbar ist. Darüber hinaus lässt sich auf Basis der ermittelten Disparitätskarte 33 eine weitere Einschränkung des Suchbereiches 6 vornehmen.

Untersuchungen zeigen weiterhin, dass sich die Qualität der Zuordnung der Merkmalspunkte durch die erwähnten Einschränkungen des Suchbereiches 6 erhöht und sich somit signifikant auf die Qualität und Stabilität der Entzerrungsmatrizen auswirkt. Die Wahrscheinlichkeit falscher Zuordnungen kann deutlich verringert werden. Damit wird die Berechnung von dichten Disparitätskarten aus nicht ausgerichteten Bildern eines Stereokamerasystems mit relativ großer Basislinie in realen Einsatzfällen möglich.

## Patentansprüche

1. Verfahren zum Bereitstellen von Bildern eines Stereokamerasystems, das wenigstens eine erste Kamera (1) und eine zweite Kamera (2) aufweist, durch die im Wesentlichen der gleiche Umgebungsbereich der realen Umgebung (4) des Stereokamerasystems fortlaufend aufgenommen wird und in Form von ersten Bildern (12) der ersten Kamera (1) und zweiten Bildern (22) der zweiten Kamera (2) fortlaufend wiedergegeben wird, **dadurch gekennzeichnet, dass** für ein jeweiliges erstes Bild (12) und ein dem ersten Bild (12) zeitlich zugeordnetes zweites Bild (22) ein rechnerischer Ausrichtungsvorgang durchgeführt wird, bei dem miteinander korrespondierende Bildpunkte im ersten und im zweiten Bild einander zugeordnet werden, wobei der rechnerische Ausrichtvorgang im laufenden Betrieb des Stereokamerasystems unter realen Einsatzbedingungen in Echtzeit fortlaufend für die ersten und zweiten Bilder (12, 22) durchgeführt wird, während die erste und die zweite Kamera (1, 2) die reale Umgebung (4) des Stereokamerasystems erfassen.

2. Verfahren nach dem vorhergehenden Anspruch, **dadurch gekennzeichnet, dass** in dem rechnerischen Ausrichtvorgang das erste Bild (12) bezüglich einer Referenzbildebene ausgerichtet wird und das zweite Bild (22) bezüglich derselben Referenzbildebene ausgebildet wird.

3. Verfahren nach einem der vorhergehenden Ansprüche, **dadurch gekennzeichnet, dass** zur Vorbereitung des rechnerischen Ausrichtvorgangs ein zu einem jeweiligen Bildpunkt des ersten Bildes (12) korrespondierender Bildpunkt des zweiten Bildes (22) gesucht wird, indem die Suche des Bildpunkts im zweiten Bild (22) auf einen festgelegten Suchbereich (6) im zweiten Bild (22) beschränkt wird, der kleiner ist als das gesamte zweite Bild (22), insbesondere indem der Suchbereich (6) maximal 25 % der Bildfläche des zweiten Bildes (22) umfasst.

4. Verfahren nach dem vorhergehenden Anspruch, **dadurch gekennzeichnet, dass** wenigstens ein Parameter des Suchbereiches (6) anhand festgelegter elektrischer und/oder mechanischer Parameter des Stereokamerasystems und/oder dessen mechanischer Befestigung an einem mit dem Stereokamerasystem ausgerüsteten Gegenstand festgelegt wird.

5. Verfahren nach einem der Ansprüche 3 bis 4, **dadurch gekennzeichnet, dass** wenigstens ein Parameter des Suchbereiches (6) dynamisch aufgrund von bei wenigstens einem vorhergehenden Ausrichtvorgang gewonnenen Daten festgelegt oder beeinflusst wird.

6. Verfahren nach dem vorhergehenden Anspruch, **dadurch gekennzeichnet, dass** der wenigstens eine Parameter des Suchbereiches (6) aufgrund von bei wenigstens einem vorhergehenden Entzerrungsvorgang gewonnenen Daten der geometrischen Entzerrung des ersten und/oder des zweiten Bildes (12, 22) festgelegt oder beeinflusst wird.

7. Verfahren nach einem der Ansprüche 5 bis 6, **dadurch gekennzeichnet, dass** der wenigstens eine Parameter des Suchbereiches (6) aufgrund einer nach einer Disparitätsbestimmung aus den Bildern des Stereokamerasystems gewonnenen Tiefeninformation dieser Bilder festgelegt oder beeinflusst wird.

8. Verfahren nach einem der vorhergehenden Ansprüche, **dadurch gekennzeichnet, dass** zur Bestimmung miteinander korrespondierender Bildpunkte im ersten und zweiten Bild (12, 22) jeweilige Merkmalspunkte (40) im ersten und im zweiten Bild (12, 22) identifiziert werden und in Echtzeit Merkmalskorrespondenzen zwischen den Merkmalspunkten im ersten und zweiten Bild (12, 22) identifiziert werden.

9. Verfahren nach einem der vorhergehenden Ansprüche, **dadurch gekennzeichnet, dass** für einen jeweiligen rechnerischen Ausrichtvorgang in Echtzeit eine jeweilige Fundamentalmatrix (14, 24) bestimmt wird, die geometrische Korrekturparameter für die Durchführung des Ausrichtvorgangs der Bilder der ersten und zweiten Kamera (1, 2) aufweist.

10. Einrichtung zur rechnergesteuerten Bereitstellung von Bildern eines Stereokamerasystems, das wenigstens eine erste und eine zweite Kamera (1, 2) aufweist, durch die im Wesentlichen der gleiche Umgebungsbereich der realen Umgebung (4) des Stereokamerasystems fortlaufend aufgenommen wird und in Form von ersten Bildern (12) der ersten Kamera (1) und zweiten Bildern (22) der zweiten Kamera (2) fortlaufend wiedergegeben wird, wobei die Einrichtung zur Bereitstellung der Bilder des Stereokamerasystems gemäß einem Verfahren der vorhergehenden Ansprüche eingerichtet ist.

11. Computerprogramm mit Programmcodemitteln, eingerichtet zur Durchführung eines Verfahrens nach einem der Ansprüche 1 bis 9, wenn das Computerprogramm auf einem Rechner einer Einrichtung zur rechnergesteuerten Bereitstellung von Bildern eines Stereokamerasystems ausgeführt wird.
